Europäisches Patentamt

European Patent Office

Office européen des brevets

(19)

(11) Veröffentlichungsnummer : **0 064 594**
**B1**

(12) **EUROPÄISCHE PATENTSCHRIFT**

(45) Veröffentlichungstag der Patentschrift :
**18.09.85**

(21) Anmeldenummer : **82102563.2**

(22) Anmeldetag : **10.04.82**

(51) Int. Cl.⁴ : **B 60 G 13/00, F 16 F 9/54,
F 16 F 1/52**

(54) **Stützlager für radführende Federbeine.**

(30) Priorität : **12.05.81 DE 3118662**

(43) Veröffentlichungstag der Anmeldung :
**17.11.82 Patentblatt 82/46**

(45) Bekanntmachung des Hinweises auf die Patenterteilung : **18.09.85 Patentblatt 85/38**

(84) Benannte Vertragsstaaten :
**BE FR GB IT NL SE**

(56) Entgegenhaltungen :
**BE-A-  516 681**
**DE-A- 1 808 530**
**DE-B- 1 009 500**
**DE-C-  729 930**
**FR-A-  931 827**
**GB-A-  891 621**
**GB-A- 2 048 796**
**US-A- 3 113 769**
**US-A- 4 236 387**

(73) Patentinhaber : **Boge GmbH**
**Bogestrasse 50**
**D-5208 Eitorf/Sieg (DE)**

(72) Erfinder : **Frenzel, Günter**
**Kelterser Strasse 51**
**D-5208 Eitorf/Sieg (DE)**
Erfinder : **Jongen, Josef**
**Auf der Niedecke 1**
**D-5227 Windeck (DE)**
Erfinder : **Gäb, Gerd**
**Piusstrasse 5**
**D-5483 Bad Neuenahr-Ahrweiler (DE)**

EP 0 064 594 B1

Jouve, 18, rue St-Denis, 75001 Paris, France

**Beschreibung**

Die Erfindung betrifft ein Stützlager für radführende, aus einem Kolbenzylinder, einem Dämpfer und einer Feder bestehende Federbeine, mit einem Lagerkern zur Krafteinleitung, einem Widerlager zur Kraftaufnahme und einem zwischen beiden befestigten Elastomerelement, wobei das Elastomerelement derart ausgebildet und/oder befestigt ist, daß bei der Krafteinleitung eine Verformung auch in Umfangsrichtung stattfindet.

Radführende Federbeine bestehen im wesentlichen aus einem Dämpfer und einer Feder, wobei der Dämpfer die der Radführung resultierenden Kräfte übertragen muß. Hierzu ist der Radträger am Außenrohr des Dämpfers starr befestigt, während sich das obere Ende von dessen Kolbenstange am Fahrzeugaufbau über ein elastisches Stützlager abstützt. Die Elastizität dieses Stützlagers wird durch ein Elastomerelement bewirkt, das mit der einen Seite an einem am Fahrzeugaufbau befindlichen Widerlager und an der anderen Seite an einem mit dem Kolbenstangenende verbundenen Lagerkern anvulkanisiert ist.

Aufgrund der Führungsfunktion des Dämpfers entstehen an der Kolbenstangenführung und zwischen Kolben und Zylinderrohr hohe Radialkräfte unter Erzeugung entsprechender Reibungskräfte. Diese Reibungskräfte sind bei kleinen Hubbewegungen, wie sie auf guten Straßen vorkommen, besonders ungünstig, da dann an den Reibungsstellen Mischreibung, im Extremfall sogar Trockenreibung auftritt. Dies macht sich besonders nachteilig an den Umkehrpunkten bemerkbar, da dann noch Haftreibungseinflüsse hinzukommen, die entsprechend hohe Losbrechkräfte erfordern.

Insgesamt ergibt sich hierdurch ein wenig geschmeidiges, zum Stuckern neigendes Fahrgefühl.

Es ist bereits bekannt, in Elastomerelementen schräg zur Krafteinleitung verlaufende Ausnehmungen vorzusehen, die jedoch anderen Zwecken dienen. So zeigt eine bekannte Vorrichtung (z. B. US-A-3 113 769) ein Lager für Fahrzeuge, bei dem beim Beladen des Fahrzeuges dem Elastomerkörper eine Drehbewegung aufgeprägt wird. Dabei wird jedoch der Elastomerkörper selbst verdreht. An eine Weitergabe der Verdrehung an ein sich anschließendes Teil, mit dem Ziel, hierdurch die Reibungsverhältnisse zu verbessern, ist nicht gedacht.

Es ist deshalb Aufgabe der Erfindung, die vorgenannten Nachteile zu vermeiden, insbesondere die Kolbenstange eines radführenden Federbeines über ein elastisches Stützlager am Fahrzeugaufbau so abzustützen, daß die Reibungsverhältnisse durch die Überlagerung der Hubbewegung mit einer Drehbewegung der Kolbenstange verbessert werden.

Diese Aufgabe wird erfindungsgemäß dadurch gelöst, daß der Lagerkern bzw. das Widerlager mit der Kolbenstange des Federbeines und Widerlager bzw. der Lagerkern mit dem Fahrzeugkörper verbunden ist. Dieser Lösung liegt die schon zur Erfindung gehörende Erkenntnis zugrunde, daß sich die Reibungsverhältnisse durch eine Überlagerung der Hubbewegung mit einer Drehbewegung wesentlich verbessern lassen, insbesondere wenn diese Drehbewegung auch an den Umkehrpunkten der Hubbewegung anhält, also phasenverschoben zu dieser verläuft. Dieses Ziel wird mit der Erfindung auf außerordentlich einfache Weise erreicht, indem zur Erzeugung einer derartigen Drehbewegung das Stützlager herangezogen wird. Bei entsprechender Ausbildung und/oder Befestigung dessen Elastomerelements kann nämlich erreicht werden, daß es sich bei Krafteinleitung nicht nur in Hubrichtung, sondern auch in Umfangsrichtung verformt und so dem Lagerkern — bei einem Federbein der Kolbenstange des Dämpfers — eine Drehbewegung aufprägt. Dabei hat sich gezeigt, daß Dreh- und Hubbewegungen nicht deckungsgleich sind, sondern phasenverschoben verlaufen. Die ersteren folgen der letzteren mit zeitlichem Abstand, wodurch bewirkt wird, daß die Drehbewegung noch anhält, wenn die Hubbewegung gerade in einem Umkehrpunkt zum Stillstand gekommen ist. Auf diese Weise werden gerade an den kritischen Punkten gute Reibungsverhältnisse gewährleistet.

Bei Verwendung eines solchen Stützlagers für ein Federbein, insbesondere wenn es radführend ist, ergibt sich ein wesentlich geschmeidigeres und ruhigeres Fahrgefühl.

Um dem Lagerkern eine Drehbewegung aufzuprägen, kann das Elastomerelement an diesem und/oder am Widerlager unter Eingriff von zur Krafteinleitung schraubenlinienförmigen Stegen befestigt sein. Alternativ dazu kann vorgesehen sein, daß die Elastomerelemente zur Krafteinleitung schräg verlaufende Ausnehmungen aufweisen, um denselben Effekt zu erzielen. Auch eine Kombination der vorgenannten Maßnahmen ist denkbar.

Sofern die Drehbewegung durch Ausnehmungen bewirkt wird, besteht die Möglichkeit, die Ausnehmungen mit einem Stoff mit einer gegenüber dem Elastomerelement anderen Elastizität zumindest teilweise zu füllen, um auf diese Weise das Verhalten des Elastomerelementes im gewünschten Maße zu beeinflussen.

Dieser Stoff kann auch eine Flüssigkeit sein, die über Drosseln mit einem Reservoir verbunden ist. Damit erhält das erfindungsgemäße Stützlager zusätzlich Dämpfungseigenschaften. Die Reservoire können dabei ein Teil der Ausnehmungen sein.

Die Ausnehmungen sind zweckmäßigerweise als Schlitze ausgebildet, die bei Bedarf in radialer Richtung und/oder zwischen Widerlager und Lagerkern durchgehend sein können.

In der Zeichnung ist die Erfindung an Hand von Ausführungsbeispielen näher veranschaulicht.

Es zeigen :

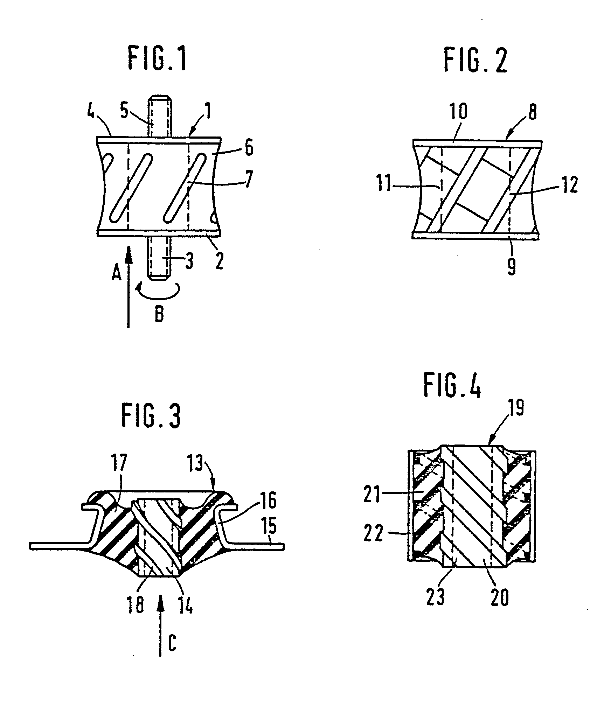

Figur 1 bis Figur 4 jeweils eine Ausführungsform eines Stützlagers.

Das in Figur 1 dargestellte Stützlager 1 hat einen plattenförmigen unteren Lagerkern 2 mit einem Befestigungsbolzen 3 sowie ein oberes, ebenfalls plattenförmiges Widerlager 4 mit einem Befestigungsbolzen 5. Zwischen beiden ist ein etwa zylinderförmiges Elastomerelement 6 mit leicht eingewölbten Außenseiten angeordnet, das in regelmäßigen Abständen schräg verlaufende Schlitze 7 aufweist. Das Elastomerelement 6 ist sowohl am Lagerkern 2 als auch am Widerlager 4 anvulkanisiert.

Ein derartiges Stützlager 1 kann beispielsweise mit seinem Lagerkern 2 an dem oberen Ende der Kolbenstange eines Federbeines und mit seinem Widerlager 4 am Fahrzeugkörper angeordnet werden. Beim Einfedern (Pfeil A) wird das Elastomerelement 6 zusammengedrückt, so daß der Lagerkern 2 eine Hubbewegung ausführt. Durch die schrägen Schlitze 7 verformt sich das Elastomerelement 6 aber auch gleichzeitig in Umfangsrichtung (Pfeil B), und zwar hier im Uhrzeigersinn. Da das Widerlager 4 fest eingebaut ist, überträgt sich diese Verformung auf den Lagerkern 2 und prägt somit der Kolbenstange eine Drehbewegung auf. Diese Drehbewegung läuft der Hubbewegung zeitlich nach und hält deshalb auch an, wenn der Umkehrpunkt der Hubbewegung erreicht ist. Auf diese Weise werden die Reibungsverhältnisse insbesondere an den kritischen Punkten wesentlich verbessert.

Figur 2 zeigt ein ähnliches Stützlager 8 mit einem beweglichen Lagerkern 9 und einem befestigbaren Widerlager 10 sowie einem dazwischen angeordneten, zylinderförmigen Elastomerelement 11. Dieses hat — wie das in Figur 1 — ebenfalls schräg verlaufende Schlitze 12, die jedoch zwischen dem Lagerkern 9 und dem Widerlager 10 durchgehend sind. Auf diese Weise ergibt sich eine entsprechend veränderte Nachgiebigkeit. Ansonsten entspricht die Funktion dem in Figur 1 dargestellten Ausführungsbeispiel.

Durch Veränderung der Anzahl und Formgebung der Schlitze in den Elastomerkörpern kann das Federverhalten in weiten Grenzen entsprechend den Erfordernissen angepaßt werden. Zusätzliche Beeinflussungsmöglichkeiten sind gegeben, wenn die Schlitze mit anderem Material, beispielsweise mit einer Flüssigkeit gefüllt werden. Auf diese Weise kann eine zusätzliche Dämpfungswirkung erzielt werden.

Figur 3 zeigt ein weiteres Stützlager 13. Es besteht aus einem stangenförmigen Lagerkern 14, einem plattenförmigen Widerlager 15 mit einem hochstehenden Kragen 16 sowie einem zwischen diesem Kragen 16 und dem Lagerkern 14 angeordneten, konisch ausgebildeten Elastomerelement 17. Der Lagerkern 14 hat an seiner Außenseite schraubenlinienförmig verlaufende Stege 18, die in das Elastomerelement 17 eingreifen. Letzteres ist sowohl am Lagerkern 14 als auch am Widerlager 15 anvulkanisiert.

Der Lagerkern 14 kann hier das Ende der Kolbenstange eines Dämpfers sein. Bei Bewegung der Kolbenstange und damit des Lagerkernes 14 nach oben (Pfeil C) wird das Elastomerelement 17 auf Schub beansprucht und federt ein. Durch die Stege 18 entsteht gleichzeitig eine Drehbewegung, die dem Lagerkern 16 aufgeprägt wird und die ebenso wie bei den Ausführungsbeispielen nach den Figuren 1 und 2 der Hubbewegung nachläuft.

Figur 4 zeigt schließlich ein Stützlager 19, daß dem nach Figur 3 ähnelt. Der Lagerkern 20 ist auch hier stangenförmig ausgebildet. An seiner Außenseite ist ein Elastomerelement 21 anvulkanisiert, dessen Aussenseite wiederum an einem zylinderförmig ausgebildeten Widerlager 22 befestigt ist. Auf der Außenseite des Lagerkernes 20 sind schraubenlinienförmig verlaufende, im Querschnitt trapezförmige Stege 23 vorgesehen, die auch hier in das Elastomerelement 21 einfassen. Die Wirkung dieser Stege 23 entspricht denen des Stützlagers nach Figur 3. Beim Einfedern überlagern sich somit Hubbewegung und Drehbewegung.

Bei den Ausführungsformen nach den Figuren 3 und 4 besteht auch die Möglichkeit, Stege am Widerlager anzubringen, da auch sie eine Drehbewegung bewirken würden.

**Patentansprüche**

1. Stützlager für radführende, aus einem Kolbenzylinder, einem Dämpfer und einer Feder bestehende Federbeine, mit einem Lagerkern (4, 10, 18, 20) zur Krafteinleitung, einem Widerlager (2, 9, 15, 22) zur Kraftaufnahme und einem zwischen beiden befestigten Elastomerelement, wobei das Elastomerelement (6, 11, 17, 21) derart ausgebildet und/oder befestigt ist, daß bei der Krafteinleitung eine Verformung auch in Umfangsrichtung (Pfeil B) stattfindet, dadurch gekennzeichnet, daß der Lagerkern (4, 10, 18, 20) bzw. das Widerlager (2, 9, 15, 22) mit der Kolbenstange des Federbeines und das Widerlager (2, 9, 15, 22) bzw. der Lagerkern (4, 10, 18, 20) mit dem Fahrzeugkörper verbunden ist.

2. Stützlager nach Anspruch 1, dadurch gekennzeichnet, daß das Elastomerelement (17, 21) am Lagerkern (14, 20) und/oder am Widerlager unter Eingriff von zur Krafteinleitung schraubenlinienförmigen Stegen (18, 23) befestigt ist.

3. Stützlager nach Anspruch 1, dadurch gekennzeichnet, daß die Elastomerelemente (6, 11) zur Krafteinleitung schräg verlaufende Ausnehmungen (7, 12) aufweisen.

4. Stützlager nach Anspruch 3, dadurch gekennzeichnet, daß die Ausnehmungen (7, 12) mit einem Stoff mit einer gegenüber dem Elastomerelement (7, 12) anderer Elastizität zumindest teilweise gefüllt sind.

5. Stützlager nach Anspruch 4, dadurch gekennzeichnet, daß der Stoff eine Flüssigkeit ist, die über Drosseln mit einem Reservoir verbunden ist.

6. Stützlager nach Anspruch 5, dadurch gekennzeichnet, daß die Reservoire ein Teil der Ausnehmungen sind.

7. Stützlager nach einem der Ansprüche 3 bis 6, dadurch gekennzeichnet, daß die Ausnehmungen als Schlitze (7, 12) ausgebildet sind.

8. Stützlager nach Anspruch 7, dadurch gekennzeichnet, daß die Schlitze (7, 12) in radialer Richtung durchgehend ausgebildet sind.

9. Stützlager nach einem der Ansprüche 7 oder 8, dadurch gekennzeichnet, daß die Schlitze zwischen Widerlager (9) und Lagerkern (10) durchgehend sind.

## Claims

1. Mounting support for wheel suspension struts comprising a piston-cylinder assembly, a damper and a spring, the support having a force-transmitting core (4, 10, 18, 20), an abutment member (2, 9, 15, 22) for taking the force and an elastomeric element secured between them, the elastomeric element (6, 11, 17, 21) being so constructed and/or secured that it is deformed also in a circumferential direction (arrow B) in transmitting the force, characterised in that, the core (4, 10, 18, 20) or the abutment member (2, 9, 15, 22) is connected to the piston rod of the suspension strut and that the abutment (2, 9, 15, 22) or the core (4, 10, 18, 20) is connected to the vehicle structure.

2. Support according to claim 1, characterised in that, the elastomeric element (17, 21) is secured to the core (14, 20) and/or to the abutment with the involvement of helical ribs (18, 23) for transmitting the force.

3. Support according to claim 1, characterised in that, the elastomeric elements (6, 11) for transmitting the force have inclined recesses (7, 12).

4. Support according to claim 3, characterised in that, the recesses (7, 12) are at least partially filled with a material having a different elasticity from that of the elastomeric element (7, 12).

5. Support according to claim 4, characterised in that, the material is a fluid which is connected to a reservoir through restrictions.

6. Support according to claim 5, characterised in that, the reservoirs are some of the recesses.

7. Support according to one of claims 3 to 6, characterised in that, the recesses are formed as slits (7, 12).

8. Support according to claim 7, characterised in that, the slits (7, 12) extend right through in a radial direction.

9. Support according to one of claims 7 or 8, characterised in that, the slits extend right through between the abutment (9) and the core (10).

## Revendications

1. Silent-bloc pour bras élastiques amortisseurs de roue directrice, comprenant un vérin, un amortisseur et un ressort, comportant un appui (4, 10, 18, 20) pour l'application de la force, un contre-appui (2, 9, 15, 22) pour la reprise de la force et un élément élastomère fixé entre les deux, étant précisé que l'élément élastomère (6, 11, 17, 21) est conçu et/ou fixé de façon que lors de l'application de la force il se produise également une déformation dans le sens périphérique (flèche B), caractérisé en ce que l'appui (4, 10, 18, 20) ou le contre-appui (2, 9, 15, 22) est lié à la tige de piston du bras élastique amortisseur et en ce que le contre-appui (2, 9, 15, 22) ou l'appui (4, 10, 18, 20) est lié à la carrosserie.

2. Silent-bloc selon la revendication 1, caractérisé en ce que l'élément élastomère (17, 21) est fixé à l'appui (14, 20) et/ou au contre-appui avec intervention de nervures (18, 23) de forme hélicoïdale par rapport à l'application de la force.

3. Silent-bloc selon la revendication 1, caractérisé en ce que les éléments élastomères (6, 11) présentent des évidements (7, 12) qui courent obliquement pour l'application de la force.

4. Silent-bloc selon la revendication 3, caractérisé en ce que les évidements (7, 12) sont au moins partiellement remplis d'un matériau d'une élasticité différente de celle de l'élément élastomère (7, 12).

5. Silent-bloc selon la revendication 4, caractérisé en ce que le matériau est un liquide relié à un réservoir par l'intermédiaire de robinets d'étranglement.

6. Silent-bloc selon la revendication 5, caractérisé en ce que les réservoirs sont une partie des évidements.

7. Silent-bloc selon l'une des revendications 3 à 6, caractérisé en ce que les évidements ont la forme de rainure (7, 12).

8. Silent-bloc selon la revendication 7, caractérisé en ce que les rainures (7, 12) vont d'un bout à l'autre en direction radiale.

9. Silent-bloc selon l'une des revendications 7 ou 8, caractérisé en ce que les rainures vont d'un bout à l'autre entre le contre-appui (9) et l'appui (10).

# FIG.1

# FIG.2

# FIG.3

# FIG.4